# EUROPÄISCHE PATENTSCHRIFT

(11) **EP 3 004 789 B1**
(45) Veröffentlichungstag und Bekanntmachung des Hinweises auf die Patenterteilung: **14.12.2016**
(21) Anmeldenummer: 14728532.4
(22) Anmeldetag: 03.06.2014
(51) Int. Cl.: F41J 5/02

(54) **MESSRAHMEN ZUR BERÜHRUNGSLOSEN OPTISCHEN ERMITTLUNG EINER DURCHSCHUSSPOSITION UND ZUGEHÖRIGES MESSVERFAHREN**
MEASURING FRAME FOR OPTICALLY ASCERTAINING A PERFORATION POSITION IN A CONTACTLESS MANNER, AND CORRESPONDING MEASUREMENT METHOD
CADRE DE MESURE POUR LA DÉTERMINATION OPTIQUE SANS CONTACT D'UNE POSITION DE TIR ET PROCÉDÉ DE MESURE ASSOCIÉ

(30) Priorität: 03.06.2013 DE 102013009248
(43) Veröffentlichungstag der Anmeldung: 13.04.2016
(73) Patentinhaber: Meyton Elektronik GmbH, 49328 Melle (DE)
(72) Erfinder: MEYER, Paul, 49497 Mettingen (DE); TEGELHÜTTER, Stefan, 49328 Melle (DE); WITTE, Udo, 32139 Spenge (DE)
(74) Vertreter: Grünecker Patent- und Rechtsanwälte PartG mbB
(86) Internationale Anmeldenummer: PCT/EP2014/061476
(87) Internationale Veröffentlichungsnummer: WO 2014/195310

(56) Entgegenhaltungen:
- DE-A1- 4 115 995
- DE-A1- 4 415 944
- US-A- 4 949 972
- US-A1- 2012 194 802

## Beschreibung

Die vorliegende Erfindung bezieht sich auf einen Messrahmen zur berührungslosen optischen Ermittlung einer Durchschussposition eines Geschosses durch eine Zielfläche. Weiterhin bezieht sich die vorliegende Erfindung auch auf ein zugehöriges Mess- und Auswerteverfahren. Die vorliegende Erfindung bezieht sich außerdem auf ein Anzeigesystem, das mindestens einen derartigen Messrahmen verwendet.

Im Sportschützenbereich und bei der Ausbildung von Schützen sind Messrahmen, die eine Durchschussposition mit Hilfe berührungsloser Lichtschrankentechnik ermitteln, seit geraumer Zeit im Einsatz. Bei einem derartigen optischen Messverfahren wird ein den Messrahmen durchfliegendes Geschoss mit Hilfe von Infrarotlichtschranken berührungsfrei vermessen. Eine einzelne Infrarotlichtschranke setzt sich dabei aus einem Infrarotsender, der Infrarotlicht in einem gebündelten Lichtstrahl aussendet, und einem Infrarotempfänger, der dem Infrarotsender gegenüber liegt und die Helligkeit des einfallenden Infrarotlichtstrahls misst, zusammen. Je nach Größe der Messrahmen sind bis zu 500 eigenständige Lichtschranken verbaut, die in einem festen Gitterraster an den Innenseiten des Rahmens angeordnet sind.

Die Infrarotsender der einzelnen Lichtschranken erzeugen innerhalb des Rahmens einen kontinuierlichen Lichtvorhang. Fliegt ein Geschoss durch diesen Lichtvorhang, werden sowohl auf der horizontalen X-Achse als auch auf der vertikalen Y-Achse des Messrahmens mehrere Lichtschranken teilweise oder vollständig unterbrochen.

Der Vorteil dieser Lösung liegt zum einen in der Verschleißfreiheit, da keine Verbrauchsmaterialien wie Papier oder Gummibänder involviert sind. Zum anderen hat die Verwendung optischer Messrahmen den Vorteil einer hohen Messgenauigkeit und einer geringen Anfälligkeit gegenüber Verschmutzung und Temperaturschwankungen.

Derartige lineare Messrahmen sind beispielsweise aus der DE 4115995 A1 oder der EP 034284 A1 bekannt. Aus der US 2012 0194802 A1 ist außerdem eine kombinierte Messvorrichtung bekannt, die zwei sich überkreuzende optische Lichtschranken zum Abdecken des innersten Zielbereichs und ein akustisches Verfahren zum Ermitteln einer Durchschussposition in einem Außenbereich verwendet. Dabei wird eine Reihe von Lichtempfängern, die auf einem Kreisbogensegment angeordnet sind, dazu verwendet die Strahlungsintensität, die von einem gegenüber liegenden Lichtsender emittiert wird, an den diversen Punkten des Kreisbogens zu ermitteln. Die Durchschussposition wird anhand der unterschiedlichen Helligkeitswerte ermittelt.

Weiterhin offenbart die US 4 949 942 A einen Messrahmen für eine automatische Schussauswertung, bei dem ein Lichtvorhang aus einer Vielzahl von Sendern und Empfängern ausgebildet wird. Zum Erzeugen von zylindrischen Lichtstrahlen mit kreisförmigem Querschnitt sind zylindrische Strahlformungsmittel ("light beam outlet means") sowohl auf der Sender-, wie auch auf der Empfängerseite vorgesehen.

Es besteht allerdings immer noch das Bedürfnis, Messrahmen mit einer erhöhten Präzision und Robustheit anzugeben, die kostengünstig herstellbar sind und vollständig auf Verschleißmaterialien wie akustische Membranen verzichten und dabei aber dennoch die maximal zulässigen Abmessungen für derartige Messrahmen einhalten.

Diese Aufgabe wird durch den Gegenstand der unabhängigen Patentansprüche gelöst. Vorteilhafte Weiterbildungen der vorliegenden Erfindung sind Gegenstand der abhängigen Patentansprüche.

Dabei basiert die vorliegenden Erfindung auf der Idee, dass ein Messrahmen zum berührungslosen optischen Ermitteln einer Durchschussposition eines Geschosses durch eine Zielfläche mindestens eine erste Strahlungsquelle zum Aussenden eines divergierenden Strahlungsfeldes besitzt, sowie eine zweite Strahlungsquelle zum Aussenden eines zweiten divergierenden Strahlungsfeldes. Das erste und zweite Strahlungsfeld kreuzen sich in einer Ebene quer zu einer Durchschussrichtung unter einem Winkel. Mindestens eine erste und mindestens eine zweite optische Empfängereinrichtung sind jeweils der ersten und zweiten Strahlungsquelle zugeordnet, empfangen ausgesendete Strahlung und werten diese aus.

Insbesondere weist jede der optischen Empfängereinrichtungen ein Array von optischen Empfängerelementen auf, die so ausgewertet werden, dass eine räumlich ausgedehnte Abschattungslage in Folge des zu detektierenden Geschosses bestimmt wird. Insbesondere sind die optischen Empfängerelemente in mindestens zwei Reihen angeordnet und die Empfängerelemente einer Reihe sind versetzt gegenüber den Empfängerelementen einer benachbarten Reihe angeordnet.

In vorteilhafter Weise kann mit Hilfe der erfindungsgemäßen Anordnung ein Auswerteverfahren durchgeführt werden, das unter Verwendung der Begrenzung der ermittelten Abschattungslagen und der Position der jeweiligen aussendenden Strahlungsquelle Tangenten an das detektierte Geschoss berechnet. Mit Hilfe eines solchen Berechnungsverfahrens kann eine wesentlich erhöhte Genauigkeit erzielt werden und es können neben der Durchschussposition, also der Lage eines Zentrums des Geschosses, auch das entsprechende Kaliber, also die Größe des Geschosses ermittelt werden.

Als Strahlungsquellen eignen sich dabei zum Beispiel Licht emittierende Dioden, LEDs, die Infrarotstrahlung aussenden, oder Laserdioden, wie beispielsweise VCSEL (vertical cavity surface emitting laser), bei denen Laserstrahlung senkrecht zur Ebene des Halbleiterchips abgestrahlt wird. Als Detektorelemente werden beispielsweise Fotodioden eingesetzt. Selbstverständlich können aber auch alle anderen geeigneten Sensortechniken, wie beispielsweise Fototransistoren verwendet werden.

Um den Lichtweg vergleichsweise kurz und damit die Gesamtabmessungen des Messrahmens klein zu halten, muss die Auflösung der Abschattungslage auf der Empfängerseite besonders kurz sein und es muss bei einer Anordnung mit einer Vielzahl von Strahlungsfeldern sichergestellt sein, dass kein Übersprechen von einer nicht zugehörigen Strahlungsquelle stattfindet. Um eine derartige hochauflösende Anordnung zu realisieren, kann gemäß einer vorteilhaften Weiterbildung der vorliegenden Erfindung eine Blendenanordnung vorgesehen werden. Dabei kann zum einen eine oder mehrere Blenden in unmittelbarer Nähe zur Strahlungsquelle angeordnet werden, um den divergierenden Strahl entsprechend zu formen, bevor er das Messfeld erreicht.

Zum anderen können Blenden in unmittelbarer Nähe zu den Empfängerelementen vorgesehen werden, um die auf die Empfängerelemente auftreffende Strahlung, nachdem sie den Messbereich durchquert hat, zu begrenzen. Eine besonders hohe Genauigkeit erzielt man durch Kombinieren dieser Blendentechnik, so dass sowohl vor der Strahlungsquelle als auch vor den Empfängerelementen eine entsprechende Blendenanordnung vorgesehen ist.

Auf besonders einfache und effiziente Weise kann der erfindungsgemäße Messrahmen realisiert werden, wenn die erste und zweite Strahlungsquelle und die zugehörige erste und zweite Empfängereinheit so angeordnet sind, dass sich die Mittelachsen der ausgesendeten Strahlungsfelder im Wesentlichen rechtwinklig kreuzen. Neben einer vereinfachten mechanischen Realisierung dieser Anordnung ist auch die geometrische Berechnung der Tangenten mit dieser Anordnung besonders einfach, da der Messrahmen dann als ersten Quadrant eines kartesischen Koordinatensystems interpretiert werden kann. Um die Präzision der Messung und den erfassbaren Messbereich auszudehnen, kann eine Vielzahl von Strahlungsquellen und zugeordneten Empfängereinrichtungen vorgesehen sein. Besonders vorteilhaft ist dabei wenn der Messrahmen, der die Zielfläche im Wesentlichen rechteckförmig begrenzt, durch vier im Wesentlichen gleichartig aufgebaute Messleisten gebildet ist, die entlang der Kanten der rechteckförmigen Begrenzung angeordnet sind. Das bedeutet, dass jede der Kanten des Messrahmens Strahlungsquellen und Empfängereinrichtungen trägt, so dass die gesamte Zielfläche durch eine Vielzahl von sich kreuzenden divergierenden Strahlungsfeldern abgedeckt ist.

Bei dem erfindungsgemäßen Auswertungsverfahren können prinzipiell vier Tangenten an das hindurch geflogene Geschoss berechnet werden. Zur eindeutigen Bestimmung der Durchschussposition ist aber nur die Berechnung von drei Tangenten erforderlich. Somit liegt im Falle einer Berechnung von vier Tangenten eine Redundanz vor, die für eine Plausibilitätsprüfung des Messergebnisses verwendet werden kann.

Die erfindungsgemäße Anordnung bietet außerdem die Möglichkeit, einen Kalibrierschritt einzuschalten. Dabei wird mindestens eine der Strahlungsquellen kurzzeitig abgeschaltet und es wird ein Differenzwert der Strahlungsintensität zwischen dem beleuchteten und unbeleuchteten Zustand an der zugehörigen Empfängereinheit ermittelt und ein Kalibrierfaktor daraus berechnet. Diese Kalibrierwerte können beispielsweise nach jeder Messung neu bestimmt werden.

Auf diese Weise können Lichtveränderungen, zum Beispiel durch Verschmutzung während des Betriebes, festgestellt werden, indem der gemessene Differenzwert mit einem Schwellenwert verglichen wird. Eine Warnmeldung kann erzeugt werden wenn dieser Schwellenwert unterschritten wird, wenn also die Intensität der ausgesendeten Strahlung nicht mehr den Erfordernissen entspricht. Ein Benutzer kann rechtzeitig über einen kritischen Zustand des Messrahmens informiert werden, bevor es beispielsweise aufgrund einer Verschmutzung zu Messfehlern kommt.

Mit Hilfe des erfindungsgemäßen Verfahrens lässt sich ohne zusätzlichen Aufwand neben der Durchschussposition auch das Kaliber eines den Messrahmen durchfliegenden Geschosses berechnen. Dies kann ebenfalls für eine Plausibilitätsprüfung herangezogen werden.

Zum besseren Verständnis der vorliegenden Erfindung wird diese anhand der in den nachfolgenden Figuren dargestellten Ausführungsbeispiele näher erläutert. Dabei werden gleiche Teile mit gleichen Bezugszeichen und gleichen Bauteilbezeichnungen versehen. Weiterhin können auch einige Merkmale oder Merkmalskombinationen aus den gezeigten und beschriebenen unterschiedlichen Ausführungsformen für sich eigenständige, erfinderische oder erfindungsgemäße Lösungen darstellen.

### Es zeigen:

- **Fig. 1**: eine perspektivische Darstellung eines Messrahmens gemäß der vorliegenden Erfindung;
- **Fig. 2**: eine Draufsicht auf den Messrahmen der Figur 1;
- **Fig. 3**: eine teilweise geöffnete Detailansicht des erfindungsgemäßen Messrahmens;
- **Fig. 4**: eine Draufsicht auf eine erste Blendeneinrichtung;
- **Fig. 5**: ein Detail aus Figur 4;
- **Fig. 6**: ein weiteres Detail aus Figur 4;
- **Fig. 7**: eine weitere Blendeneinrichtung;
- **Fig. 8**: ein Detail aus Figur 7;
- **Fig. 9**: ein weiteres Detail aus Figur 7;
- **Fig. 10**: ein weiteres Detail aus Figur 7;
- **Fig. 11**: eine Draufsicht auf eine dritte Blendeneinrichtung;
- **Fig. 12**: ein Detail aus Figur 11;
- **Fig. 13**: ein weiteres Detail aus Figur 11;
- **Fig. 14**: eine weitere Blendeneinrichtung;
- **Fig. 15**: eine weitere Blendeneinrichtung;
- **Fig. 16**: eine weitere Blendeneinrichtung;
- **Fig. 17**: eine Prinzipdarstellung der Wirkungsweise der ersten Strahlformer in Blendeneinrichtungen;
- **Fig. 18**: eine schematische Darstellung der Wirkungsweise der zweiten Strahlformer in Blendeneinrichtung;
- **Fig. 19**: eine schematische Darstellung des auftreffenden Lichtstrahls auf der Empfängerseite;
- **Fig. 20**: eine schematische Darstellung der Wirkungsweise der empfängerseitigen Blenden;
- **Fig. 21**: eine gekippte Darstellung der Anordnung aus Figur 20;
- **Fig. 22**: eine schematische Darstellung der Empfängereinrichtungen und der ihnen am nächsten liegenden Blendenanordnung;

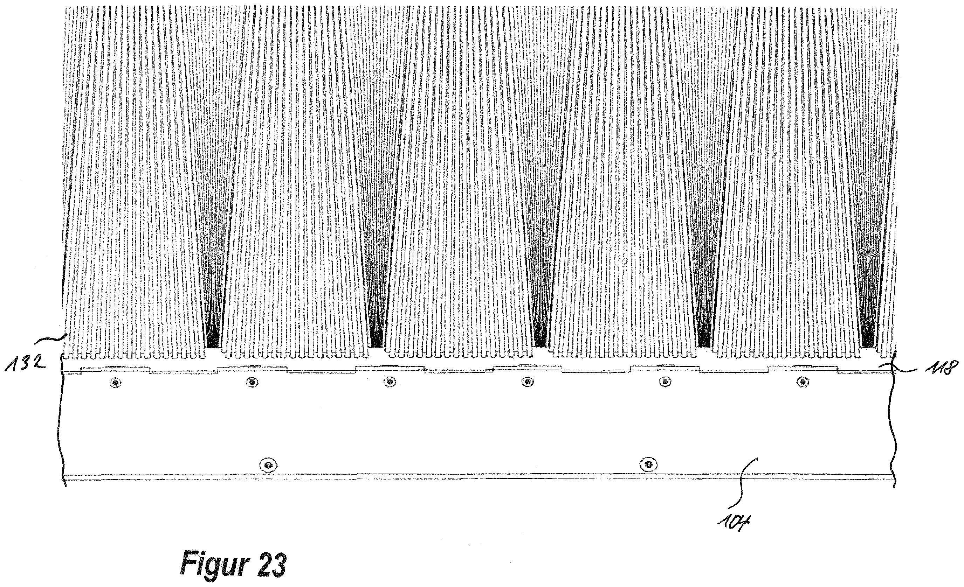

- **Fig. 23**: eine schematische Darstellung der Berechnungsgrundlage;

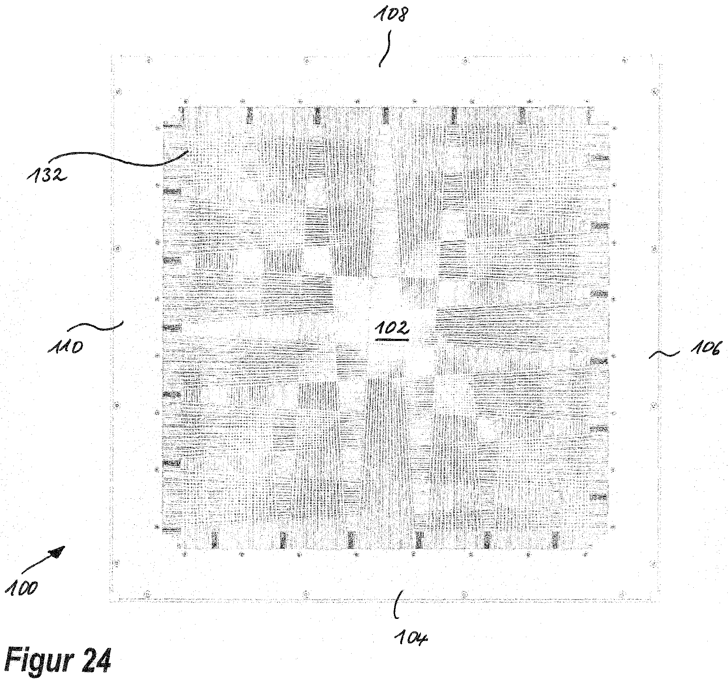

- **Fig. 24**: eine schematische Darstellung des Messfeldes mit fiktiven Lichtschranken, die der Berechnung dienen;
- **Fig. 25**: ein Detail aus Figur 24 unter der Annahme, dass ein Geschoss die Zielebene durchfliegt;
- **Fig. 26**: ein Detail aus Figur 25;
- **Fig. 27**: ein Detail der Blendenanordnungen in der Nähe der Empfänger beim Abschatten durch ein Geschoss;
- **Fig. 28**: eine Draufsicht auf das Array von Empfängerelementen im Falle eines Kugeldurchflugs;
- **Fig. 29**: eine Illustration der Berechnungsgrundlage zum Ermitteln der Tangenten an ein Geschoss.

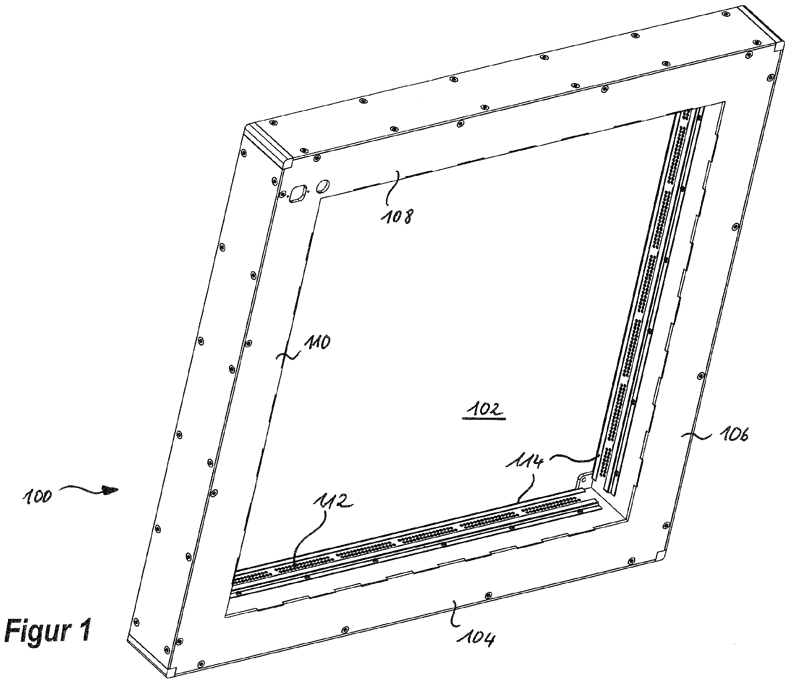

Figur 1 zeigt in einer perspektivischen Darstellung einen Messrahmen 100 gemäß einer vorteilhaften Ausführungsform der vorliegenden Erfindung.

In der gezeigten Ausführungsform ist der Messrahmen im Wesentlichen quadratisch ausgebildet und umgibt eine ebenfalls im Wesentlichen quadratische Zielebene 102, durch welche die zu detektierenden Geschosse hindurchfliegen.

Wie dies aus den nachfolgenden Figuren noch deutlich wird, dringen aus jeder der Messrahmenleisten 104, 106, 108 und 110 divergierende Strahlungsfelder, die auf die jeweils gegenüber liegende Messrahmenleiste auftreffen. Dadurch kreuzen sich die Strahlungsfelder der jeweils senkrecht aufeinander stehenden Messrahmenleisten rechtwinklig.

Jede der Messleisten 104 bis 110 besitzt sowohl Strahlungsquellen wie auch optische Empfängereinrichtungen. In der Figur 1 sind lediglich die äußersten Blendenöffnungen für die darunter angeordneten Empfängereinrichtungen erkennbar.

Diese Blendenarrays 112 sind, da sie den Durchschussbereich 102 begrenzen, noch von einer transparenten Abdeckung, beispielsweise einer Acrylglasscheibe, bedeckt. In Figur 1 sind die zugehörigen Halterungen 114 erkennbar.

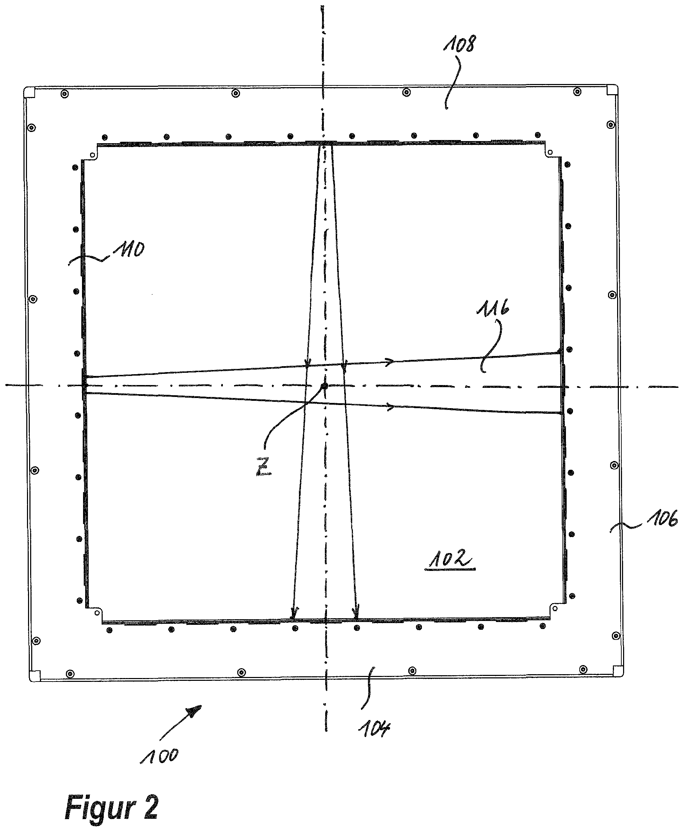

Figur 2 zeigt in einer Draufsicht den Messrahmen 100 aus Figur 1. In Figur 2 ist schematisch der Verlauf zweier divergierender Strahlungsfelder 116 illustriert, die sich in der Zielebene 102 kreuzen. Da nun jede der Messrahmenleisten entsprechend mit Strahlungsquellen und Empfängereinrichtungen ausgerüstet ist, lässt sich die gesamte Zielebene mit diesen divergierenden Strahlungsfeldern 116 abdecken. Das Zentrum Z der Zielebene ist bei der erfindungsgemäßen Lösung eindeutig durch die mechanischen Gegebenheiten festgelegt.

Als Strahlungsquellen eignen sich beispielsweise lichtemittierende Dioden (LED), die im Infrarotbereich emittieren. Selbstverständlich können aber auch andere Strahlungsquellen, wie Laserdioden oder dergleichen, verwendet werden. Passend zu dem jeweiligen verwendeten Typ Strahlungsquelle wird die entsprechende Empfängereinrichtung gewählt. Beispielsweise können dies Fotodioden oder Fototransistoren sein.

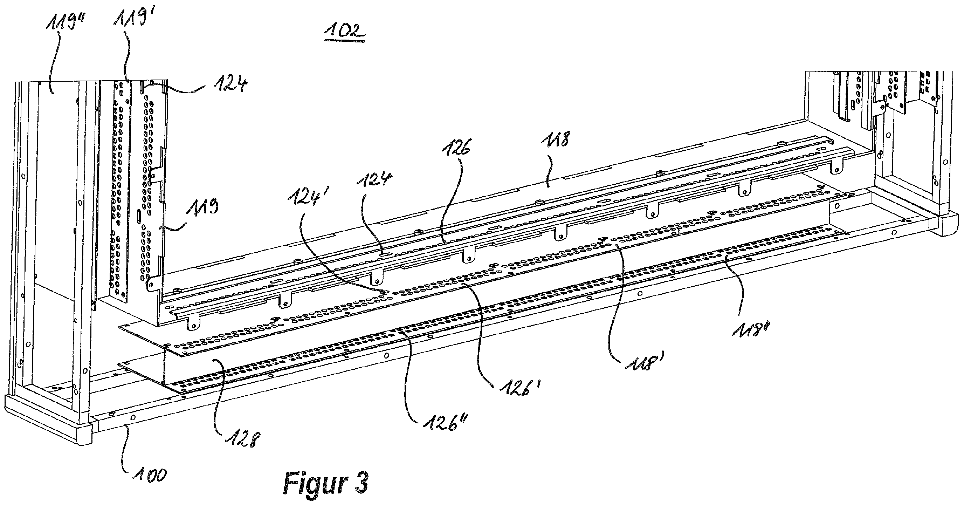

Gemäß der vorliegenden Erfindung sind an jeder der Messrahmenleisten 104, 106, 108, 110 diverse Blendenleisten angeordnet. Dabei umfasst jede der Blendenleisten Lochblenden zum Formen der ausgesendeten Strahlung an einem Ort, der in unmittelbarer Nähe zu den Strahlungsquellen angeordnet ist und Lochblenden zum Fokussieren der auf den Empfänger fallenden Strahlung an einem Ort, der unmittelbar über den Empfängerelementen liegt. Figur 3 verdeutlicht in einer Teilansicht die Anordnung der Blendenleisten.

Erfindungsgemäß gibt es zwei Typen von Blendenleisten, nämlich einmal diejenigen Leisten, die beispielsweise unten und rechts angeordnet sind und diejenigen, die oben und links montiert sind. Auf diese Weise wird sichergestellt, dass jeweils zwei unterschiedliche Leisten einander gegenüber liegen, sodass die von der Strahlungsquelle ausgesendete Strahlung an der gegenüber liegenden Messrahmenleiste auf die zugehörigen Empfängerelemente trifft.

In Figur 3 ist eine Ausführungsform gezeigt, in der drei erste Blendenleisten 118, 118' und 118" vorgesehen sind. Dabei besitzt jede der Blendenleisten 118, 118', 118" Lochblenden für das Formen des ausgesendeten Strahlungsfeldes und für das Abdecken der zu empfangenden Strahlung nach dem Passieren der Zielebene. Wie dies aus den nachfolgenden Figuren noch deutlich wird, hat die der Zielebene 102 nächst gelegene Blendenleiste 118 Langlochblenden 124 zum Formen des Strahlungsfeldes 116 bevor dieses in die Zielebene eintritt. Weiterhin besitzt die Blendenleiste 118 für das von der gegenüber liegenden Messrahmenleiste eintreffende Strahlungsfeld kreisförmige Lochblenden, welche die auf die Empfängerelemente auftreffende Strahlung begrenzen (Bezugszeichen 126). In einem gewissen Abstand zu der ersten Blendenleiste 118 ist eine weitere Blendenleiste 118' angeordnet, die zum einen enger begrenzte Lochblenden 126' zum Begrenzen der einfallenden Strahlung aufweist und zum anderen eine etwas kleiner dimensionierte Langlochblende 124' zum Formen der ausgesendeten Strahlung.

Unmittelbar über dem hier nicht dargestellten Schaltungsträger, auf dem die LEDs und Fotodioden montiert sind, ist die dritte Blendenleiste 118" angeordnet. In Figur 3 ist hier nur das Array von Empfängerlochblenden 126" erkennbar, da zum Abschirmen gegenüber ungewollter Streustrahlung durch die in dieser Messrahmenleiste befindlichen Strahlungsquellen eine Trennblende 128 vorgesehen ist.

Die entsprechenden zweiten Blendenleisten 119, 119' und 119" unterscheiden sich von den ersten Blendenleisten 118, 118', 118" durch die Position der Senderblenden und Empfängerblenden. Diese ist so gewählt, dass eine geradlinige Interaktion mit den jeweils unmittelbar gegenüber liegenden Empfängerelementen sichergestellt ist. Die Abmessungen der Empfängerlochblenden und der Senderlochblenden sind aber aus Symmetriegründen identisch gewählt.

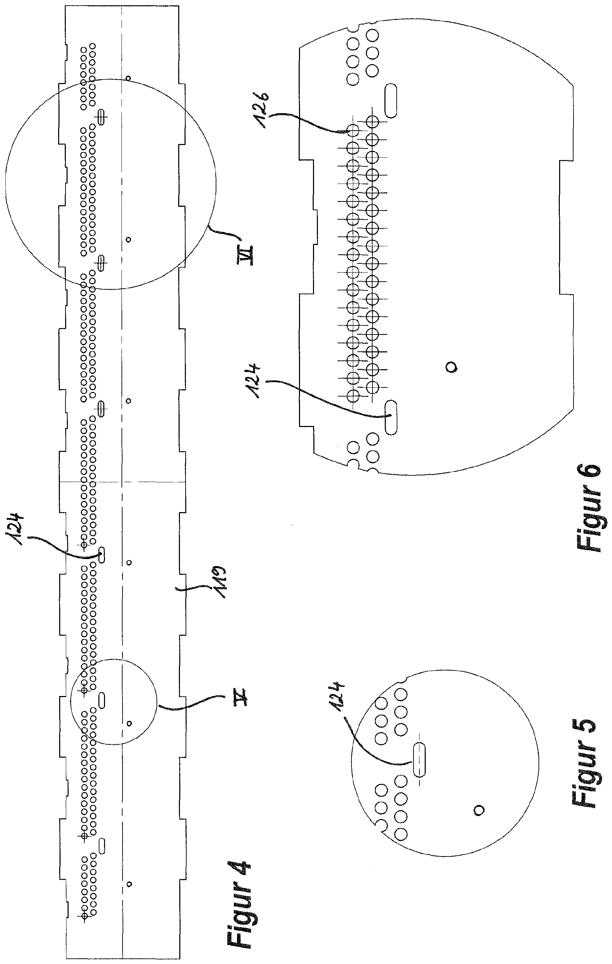

Die Figuren 4 bis 6 zeigen entsprechend die äußere zweite Blende 119, welche unmittelbar an die Zielebene 102 angrenzt. Gemäß der vorliegenden Ausführungsform sind insgesamt sechs Strahlungsquellen an dieser Messrahmenleiste vorgesehen, sodass entsprechend die Blendenleiste 119 sechs Langlochblenden 124 aufweist. Gemäß der speziellen Ausführungsform dieser Figuren weist die Empfängereinrichtung ein Array von 32 Empfängerelementen auf, sodass optisch fluchtend mit diesen Empfängerelementen in der Blendenleiste 119 für jedes Empfängerelementearray ein Array von 32 Empfängerlochblenden 126 vorgesehen ist.

Um die Auflösung und die Genauigkeit zu verbessern, sind insbesondere zwei Reihen von Empfängerelementen so angeordnet, dass sie jeweils versetzt zueinander sind, wie dies aus Figur 6 deutlich wird.

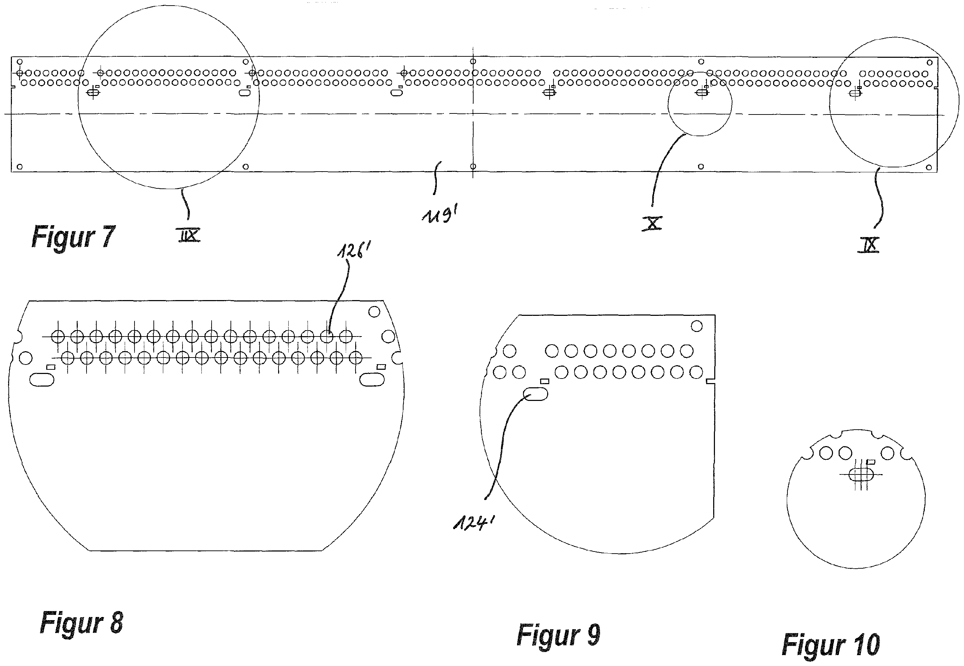

Die mittlere zweite Blendenleiste 119', welche sich in größerer Nähe zu der Platine mit den Strahlungsquellen und Empfängerelementen befindet, ist in den Figuren 7 bis 10 dargestellt. Die Empfängerlochblenden 126' sind dabei beispielsweise mit dem gleichen Durchmesser gewählt wie die Empfängerlochblenden 126. Selbstverständlich könnte aber auch ein anderer Durchmesser gewählt werden. Die Langlochblenden für die ausgesendete Strahlung 124' ist aber von unterschiedlicher Form im Vergleich zu der Langlochblende 124 aus den Figuren 4 bis 6. So kann die Langlochblende 124' beispielsweise mit demselben Radius, aber einer kürzeren Erstreckung als die äußere Lochblende 124 ausgeformt werden. Durch die Begrenzung der ausgesendeten Strahlung auf nur einen geringeren Teilbereich lässt sich erfindungsgemäß eine deutliche Homogenisierung der verwendeten Strahlung erreichen, wodurch die Messfehler geringer und die Auswertung vereinfacht wird.

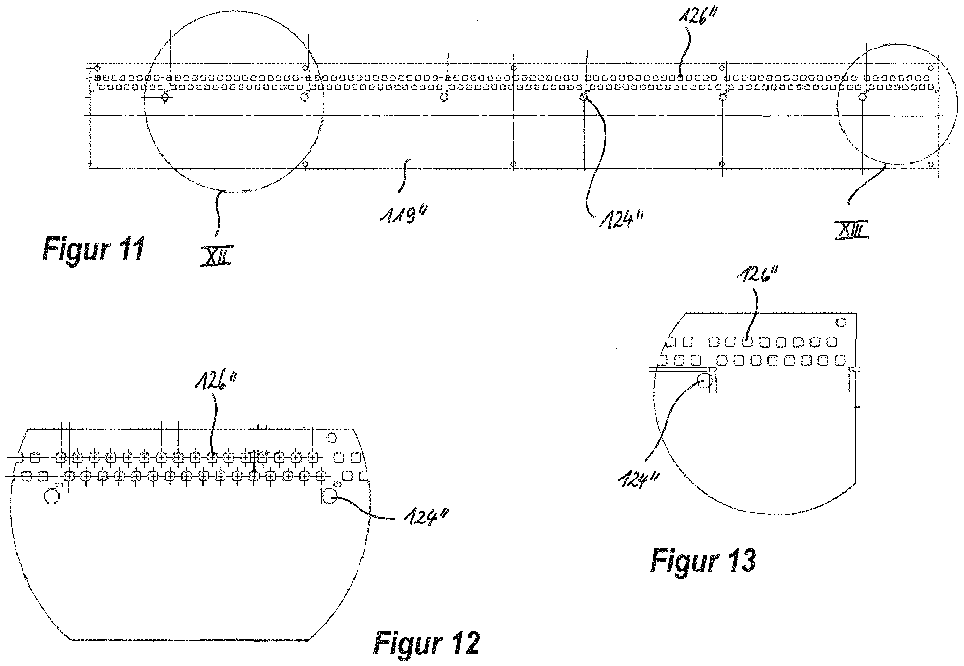

Die Figuren 11 bis 13 schließlich zeigen die innerste zweite Blendenleiste 119". Diese Blendenleiste befindet sich in der geringsten Entfernung zu den eigentlichen Bauelementen und hat zum ersten Formen des ausgesendeten Strahlungsfeldes eine kreisförmige Senderblende 124". Jedem Empfängerelement ist eine Empfängerlochblende 126" zugeordnet, die eine im Wesentlichen rechteckförmige Gestalt mit verrundeten Ecken besitzt. Eine solche rechteckförmige Ausgestaltung ermöglicht eine besonders effiziente Nutzung der bis hierhin einfallenden Strahlung, da die rechteckförmigen Empfängerlochblenden 126" im Wesentlichen einer Außenkontur der darunterliegenden Empfängerelemente entsprechen.

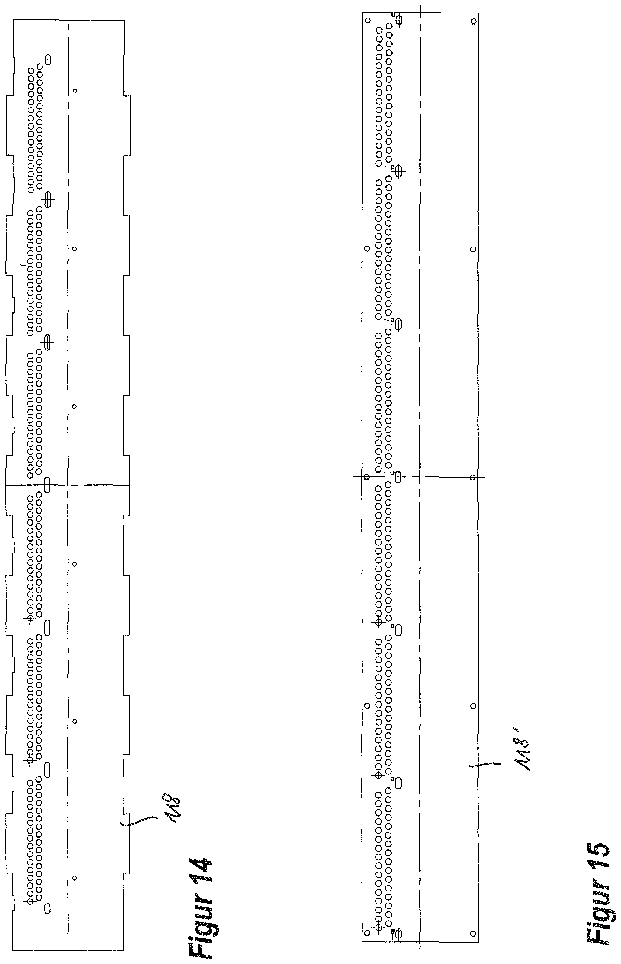

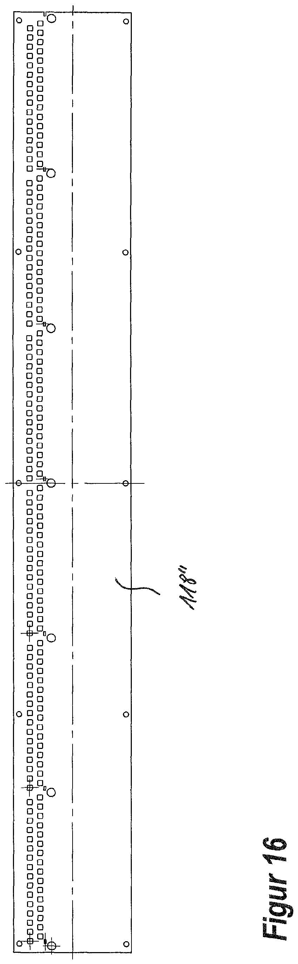

Die Figuren 14 bis 16 illustrieren die korrespondierenden ersten Blendenleisten 118, 118' und 118", die an den jeweils gegenüber liegenden Messrahmenleisten angebracht sind, sodass jeweils ein Array von Empfängerelementen einer Strahlungsquelle gegenüber liegt. Abgesehen davon sind die Abmessungen und Formen der Sender und Empfängerlochblenden identisch. Dies hat den Vorteil, dass die Stanzwerkzeuge zur Herstellung der Blendenleisten vereinheitlicht werden können.

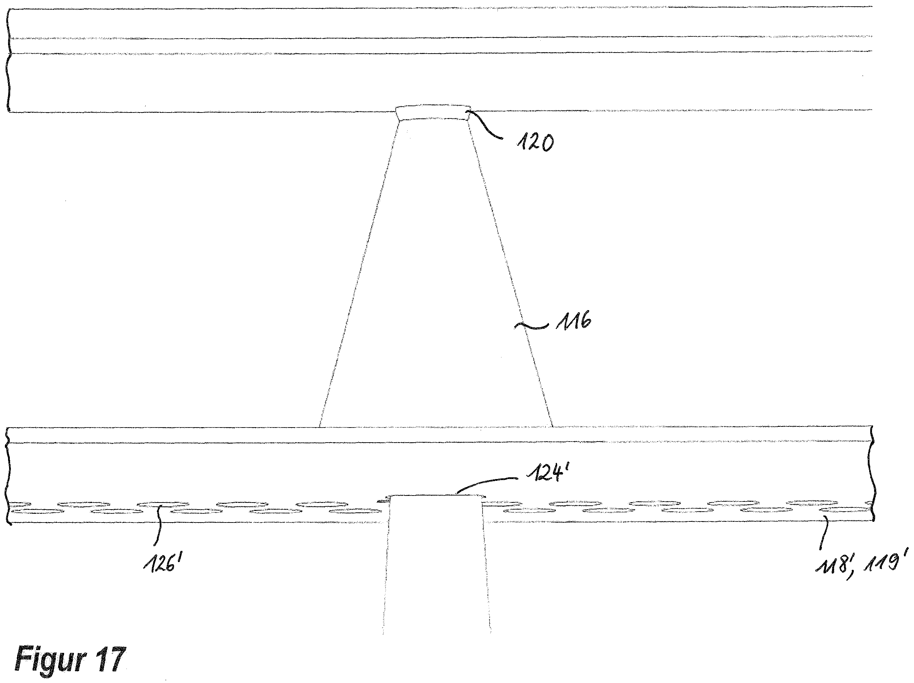

Nachfolgend soll mit Bezug auf die Figuren 17 bis 22 im Detail auf die Strahlungsführung bei der Emission und Detektion eingegangen werden.

Figur 17 zeigt die Wirkung einer Langlochblende 124'. Insbesondere wird aus dem kegelförmigen Strahlungsfeld 116 einer Strahlungsquelle 120, beispielsweise einer LED, mit Hilfe der Langlochblende 124' ein länglicher wesentlich reduzierter Bereich herausgeschnitten. Durch diese Beschränkung wird, wie bereits erwähnt, die Homogenität der Strahlung, die die Langlochblende 124 verlässt, erhöht. Anzumerken ist, dass in Figur 17 die kreisförmige Blende 124" nicht dargestellt ist, um die Übersichtlichkeit zu erhöhen. Die Position der Lochblende könnte in Figur 17 auch gleichgesetzt werden mit der Position der Strahlungsquelle 120.

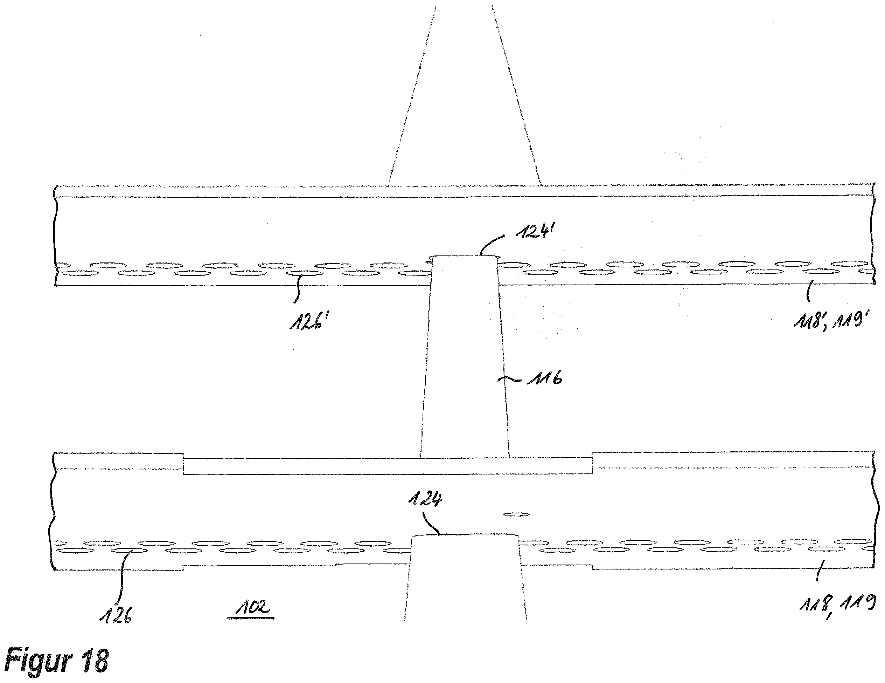

Figur 18 zeigt in der Übersicht die Wirkungsweise der beiden Langlochblenden 124' und 124, die so beabstandet voneinander sind, dass die größere Langlochblende 124 keinen signifikanten Anteil der Strahlung mehr entfernt, sondern lediglich die Randbereiche formt und die Streustrahlung verringert.

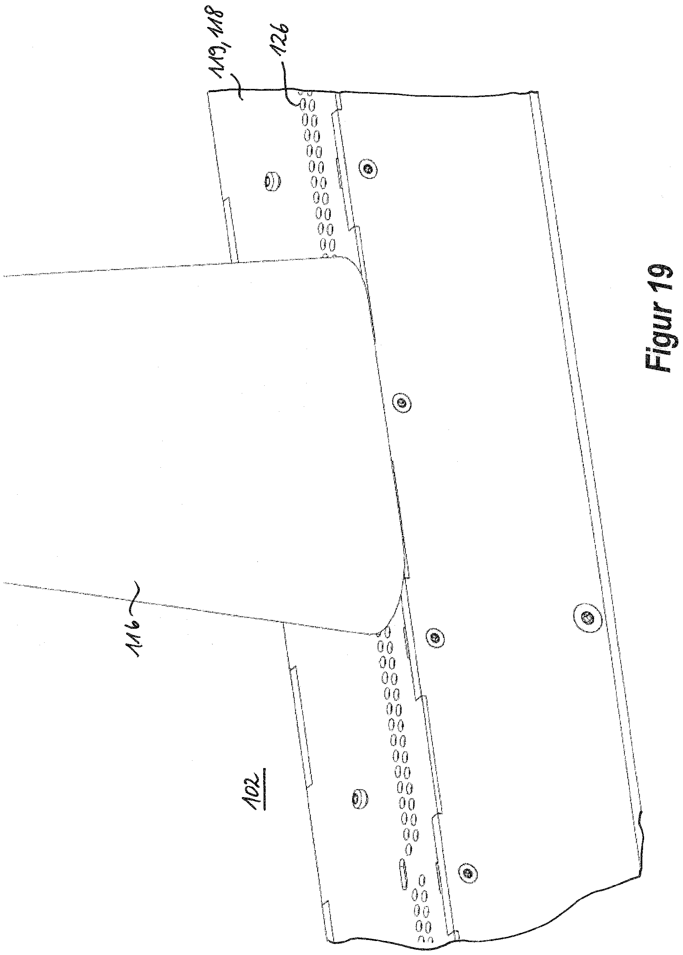

Wie in Figur 19 gezeigt, trifft ein gut definiertes divergierendes Strahlungsfeld 116 auf die jeweils gegenüber liegende Messleiste und zwar entsprechend auf die jeweils unterschiedliche Blendenleiste 119 bzw. 118.

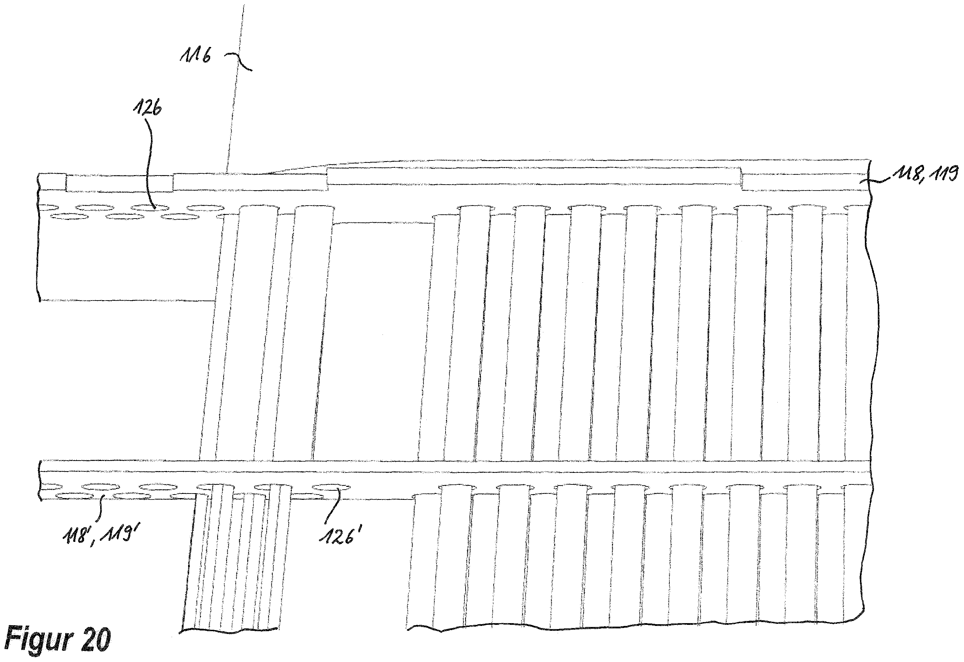

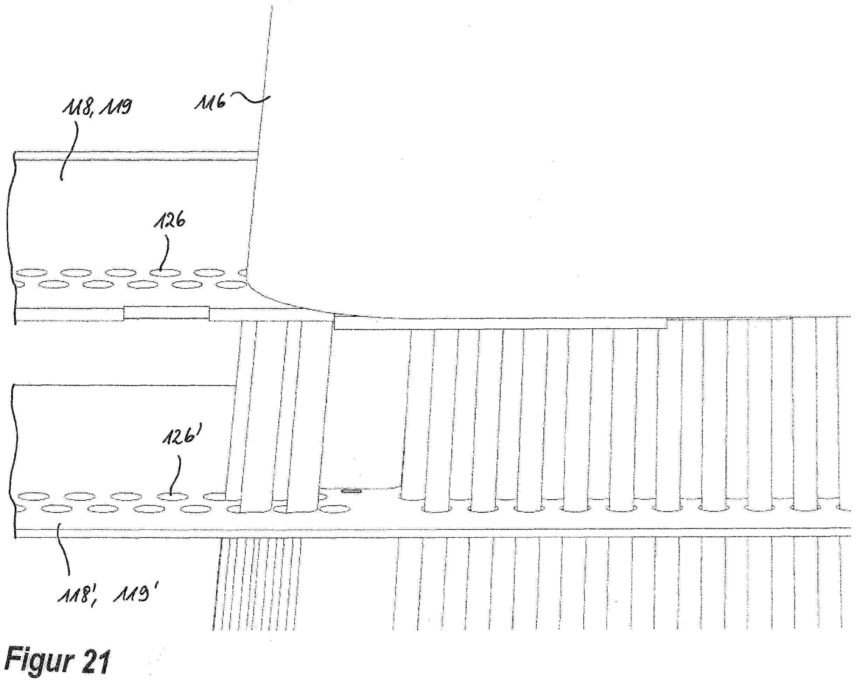

Wie aus den zwei Detailansichten der Figuren 20 und 21 erkennbar ist, bewirken die Empfängerlochblenden 126 und 126' eine Formung der nach unten zu den Empfängerelementen gelangenden Strahlung und insbesondere eine bereits deutliche Reduzierung der Strahlung, die auf nicht zu der unmittelbar gegenüber liegenden Strahlungsquelle gehörende Empfängerelemente fällt. Dieses Abschneiden der Strahlung durch die eigentlich nicht zugeordneten Lochblenden ist durch den erhöhten Einfallswinkel, unter dem Strahlung von einer nicht zugeordneten Strahlungsquelle einfällt, begründet.

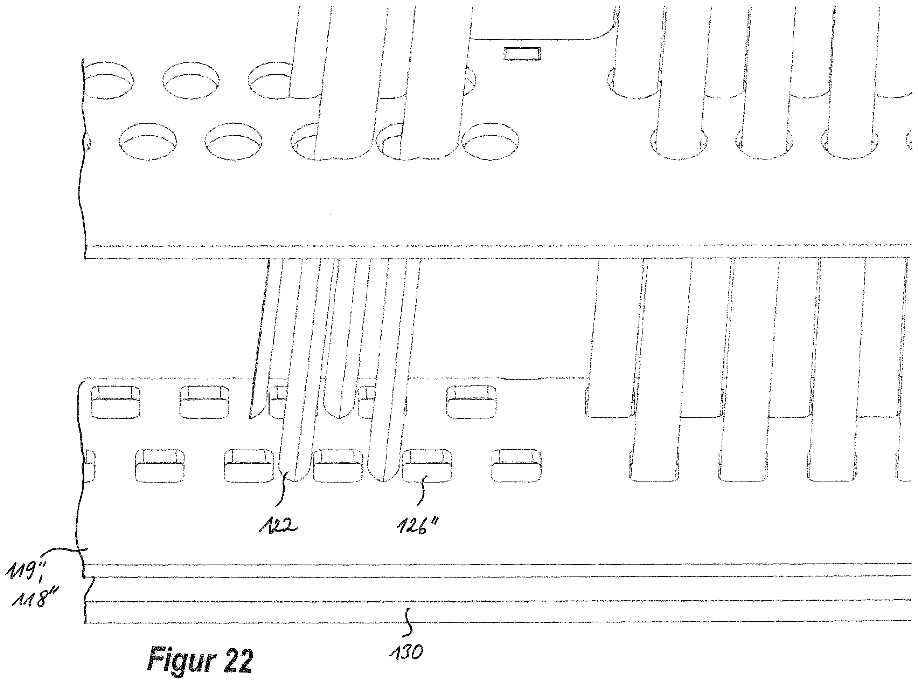

Figur 22 zeigt anschließend die Funktion der innersten Lochblende 126". Es ist erkennbar, dass von der Streustrahlung 122 nichts mehr durch die rechteckförmigen Lochblenden 126" bis zu dem Schaltungsträger 130 gelangt, auf dem die Empfängerelemente angeordnet sind.

Für die rechnerische Auswertung kann man sich damit die Zielebene 102 als durchsetzt von einzelnen virtuellen Lichtschranken 132 vorstellen, wie dies in den nachfolgenden Figuren zur Erläuterung des Berechnungsprinzips dargestellt ist. Allerdings ist festzuhalten, dass rein physikalisch die Zielebene 102 stets von kontinuierlichen Strahlungskegeln durchdrungen ist. Zur Auswertung werden lediglich die nachfolgend herausgezeichneten virtuellen Lichtschranken 132 herangezogen.

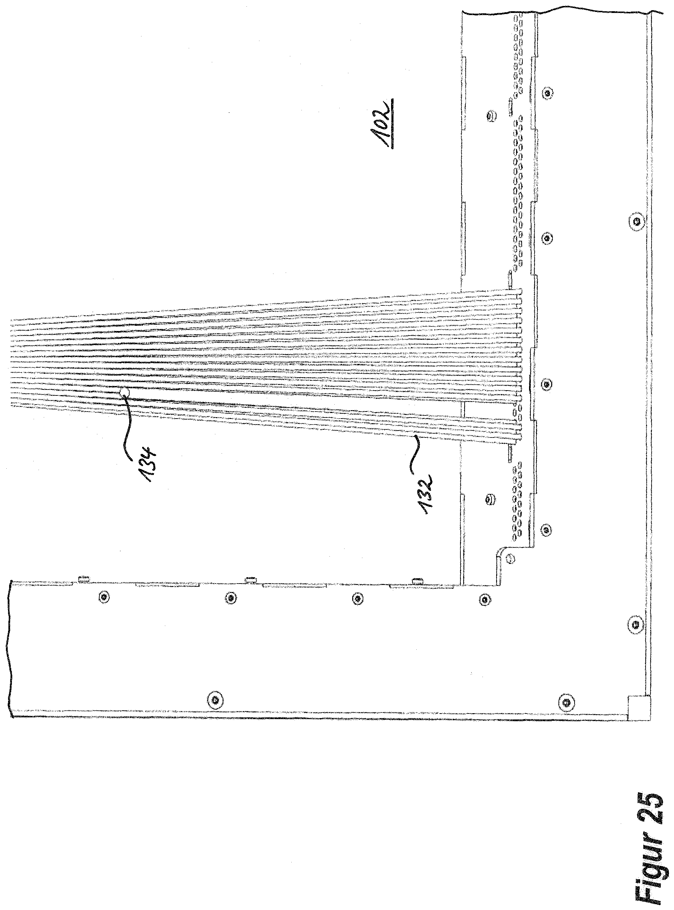

Figur 25 zeigt die Situation beim Durchfliegen eines Geschosses 134 durch die Zielebene 102. Bei dem hier beispielhaft dargestellten Kaliber des Geschosses 134 werden drei virtuelle Lichtschranken 132 unterbrochen. In anderen Worten, drei Empfängerelemente werden nicht beleuchtet.

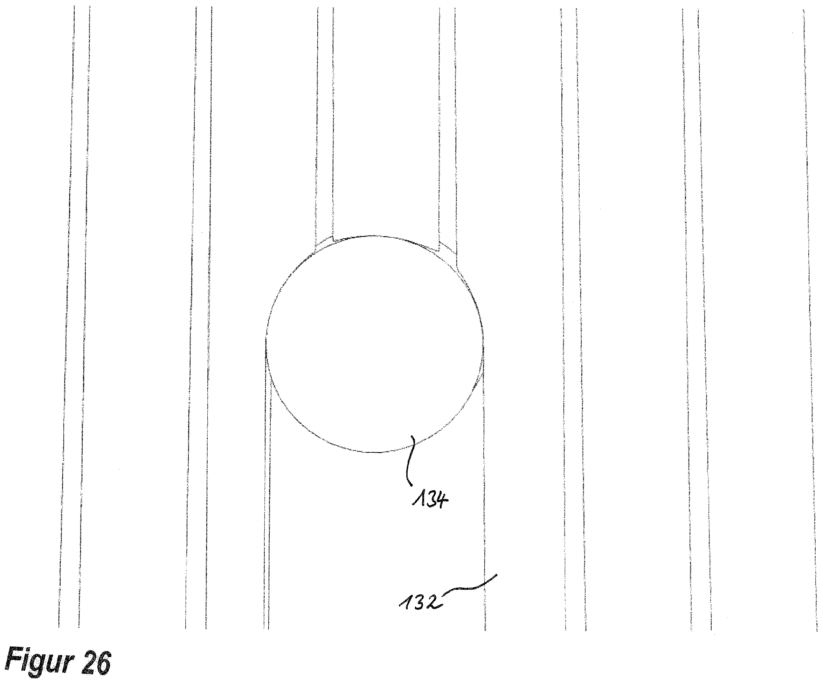

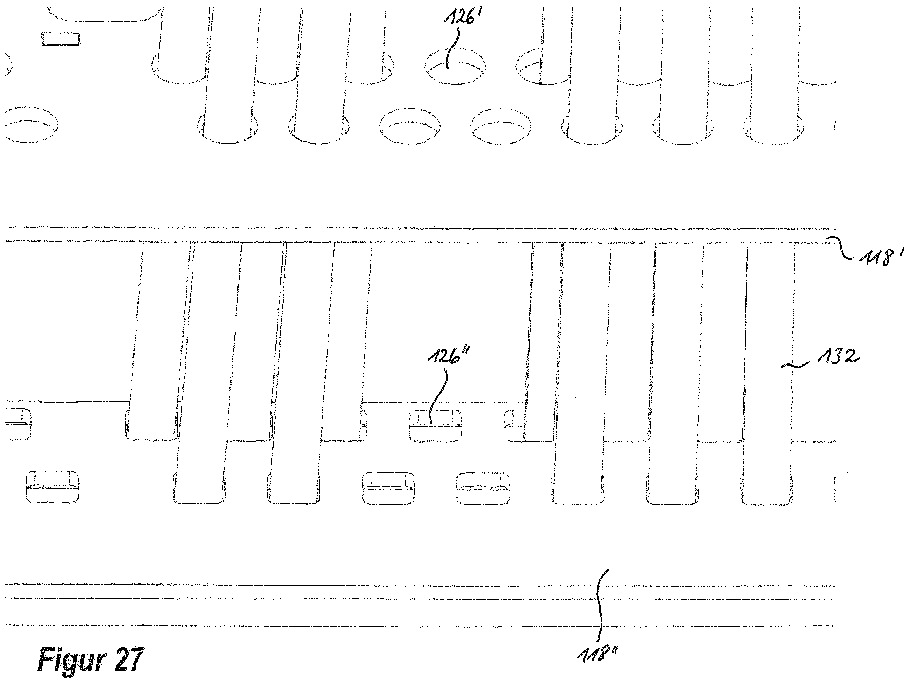

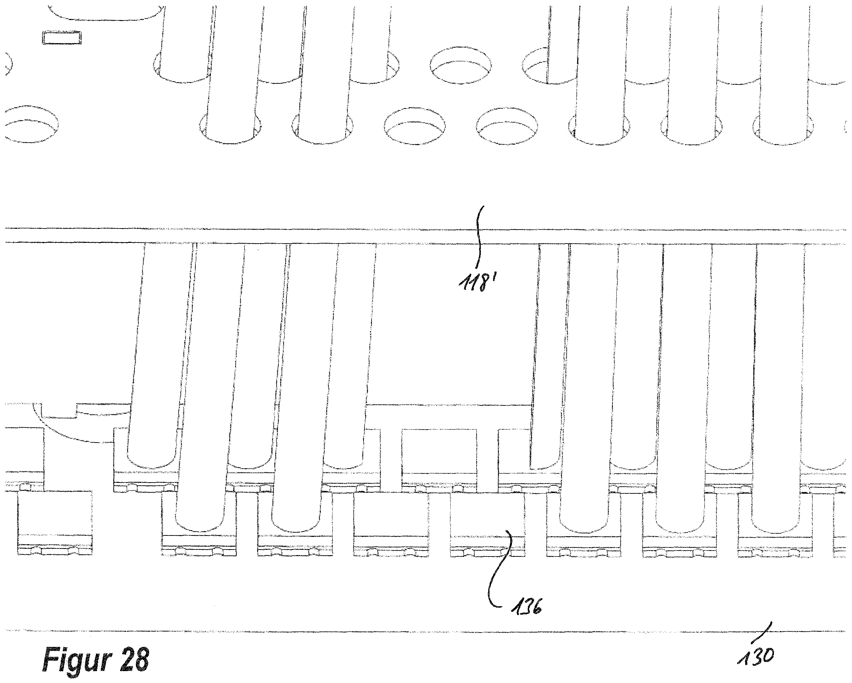

Je nach Durchschussposition und Kaliber des Geschosses 134 können Lichtschranken ganz oder auch nur teilweise unterbrochen werden, wie dies in Figur 26 skizziert ist. Figur 27 zeigt eine perspektivische Darstellung des Bereichs der rechteckförmigen Empfängerlochblenden 126" und es ist erkennbar, dass bei der in Figur 25 dargestellten Situation genau drei Empfängerelemente gar nicht beleuchtet werden, während ein viertes Empfängerelement nur einen Teilstrahl empfängt und daher eine reduzierte Intensität misst. Zur Erläuterung der Anordnung der Empfängerelemente 136 ist in der Darstellung der Figur 28 die Blendenleiste 119" der Figur 28 entfernt.

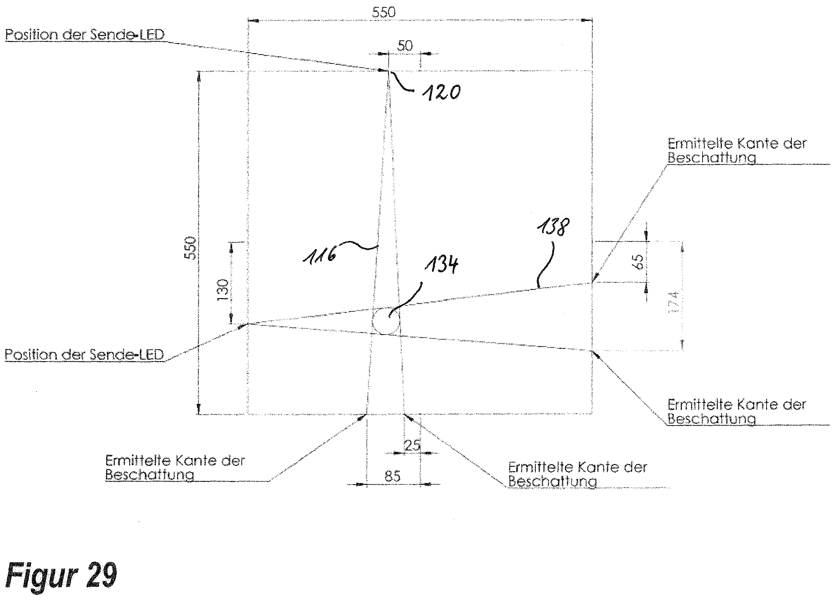

Unter Bezugnahme auf alle bisherigen Figuren und unter Hinzunahme der Figur 29 wird nachfolgend die erfindungsgemäße Auswertung im Detail erläutet.

Wie bereits erwähnt, besteht das Messfeld aus einzelnen im Wesentlichen dreieckförmigen Lichtfeldern. Ein einzelnes Feld hat eine Lichtquelle 120, deren Licht auf lichtempfindliche Sensoren in Arrayform strahlt. Um den Schatten des Geschosses 134 in dem Strahlungsfeld 116 exakt vermessen zu können, sind wie erläutert vor den Sensoren und vor den Strahlungsquellen Blenden montiert. Diese Blenden bewirken, dass das kontinuierliche Strahlungsfeld 116 in eine Vielzahl von virtuellen Lichtschranken aufgeteilt wird. Dies sind beispielsweise 32 pro Empfängerarray in der vorliegenden Ausführungsform. Der ermittelte Messwert eines jeden Empfängerelements wird beispielsweise in bis zu 220 Stufen unterteilt. Wie bereits erläutert, wird die ungewollte Beeinflussung des Messwerts durch Fremdlicht, insbesondere Strahlung von benachbarten Strahlungsquellen, durch die vorgesehenen Blenden verhindert.

Die Messfläche, die der Zielebene 102 entspricht, wird im Auswertemodell gemäß der vorliegenden Erfindung als erster Quadrant eines kartesischen Koordinatensystems abgebildet. Wie in Figur 29 gezeigt, werden die Grenzpunkte des Schattens auf der jeweils einer Strahlungsquelle gegenüber liegenden Seite ermittelt. Die Koordinate der jeweils zugehörigen Strahlungsquelle 120 ist mechanisch vorgegeben und bekannt und es lassen sich daher die Grenzen des Schattens durch zwei Geraden 138, die gleichzeitig Tangenten an das Geschoss 134 darstellen, ermitteln. Da die Messung mit Hilfe zweier sich kreuzender Strahlungsfelder 116 aus zwei unterschiedlichen Strahlungsquellen 120 erfolgt, erhält man insgesamt vier Tangenten 138, zwischen denen sich das Geschoss 134 befinden muss. Die Schnittpunkte der vier Geraden 138 stellen die Eckpunkte eines Tangentenvierecks dar.

Des Weiteren ist der Schnittpunkt der Winkelhalbierenden des jeweiligen Geradenpaars der Mittelpunkt des zu vermessenden Geschosses und damit die gesuchte Durchschussposition. Weiterhin kann der Durchmesser des Geschosses, das Kaliber, aus den Tangenten mittels einfacher trigonometrischer Berechnung hergeleitet werden.

Da ein Kreis eindeutig durch die Berührungspunkte von drei an ihn anliegenden Tangenten beschrieben ist, kann mit der erfindungsgemäßen Berechnungsmethode eine Prüfung auf Plausibilität erfolgen, da die gemessene vierte Tangente eine redundante Information darstellt.

Um optimale Messwerte zu erhalten, kann eine der Strahlungsquellen kurzzeitig, beispielsweise für ca. 200 µs, ausgeschaltet werden. Hierdurch entsteht eine Strahlungsveränderung, die einer hundertprozentigen Beschattung der gegenüber liegenden Empfängerelemente entspricht. Die durch diesen Kalibrierschritt ermittelten Werte kann man zum Kalibrieren des Messrahmens nutzen. Beispielsweise kann nach jeder Messung mit Hilfe der Kalibrierwerte nachkalibriert werden.

Darüber hinaus können auch Strahlungsintensitätsveränderungen, die beispielsweise durch Verschmutzung auftreten, während des Betriebes überprüft werden. Insbesondere kann unmittelbar nach jeder Messung die Qualität des Messfeldes durch beispielsweise sequentielles Abschalten der Strahlungsquellen überprüft werden. Es werden neue Kalibrierwerte erzeugt und aus diesen und den ursprünglichen Kalibrierwerten können Kalibrierfaktoren berechnet werden, indem man den neuen Wert durch den ursprünglichen Kalibrierwert dividiert. Diese Kalibrierfaktoren können einerseits für eine möglichst genaue Positionsbestimmung des Geschosses 134 genutzt werden. Andererseits kann aber anhand dieser Faktoren auch eine Veränderung der Strahlungsintensität ermittelt werden und dazu genutzt werden, um einen Anwender möglichst frühzeitig über einen verschlechterten Zustand des Messrahmens zu informieren. Beispielsweise kann ein Schwellenwertvergleich vorgenommen werden, um festzulegen, wie hoch die noch zulässige Abnahme der Lichtintensität ist.

Mit der erfindungsgemäßen Auswertung und dem beschriebenen Messrahmen können Durchschussanzeigesysteme entwickelt werden, die zuverlässig, kostengünstig und äußerst genau Durchschusspositionen ermitteln und anzeigen. Weiterhin können die Dimensionen eines erfindungsgemäßen Messrahmens so gering gehalten werden, dass die für alle Wettbewerbszulassungen erforderlichen Maximalabmessungen zwischen der Mitte einer Zielscheibe zur Mitte der benachbarten Zielscheibe eingehalten werden können. Beispielsweise kann die maximal zulässige Mitte-Mitte-Entfernung zweier Zielscheiben von 750 mm bei einem Zielscheibendurchmesser von 500 mm (Distanz 25 m) eingehalten werden. Diese Maximalabmessungen sind für die ISSF (International Shooting Sport Federation)-Zulassung zur Messung bei der olympischen Disziplin "Rapid Fire" erforderlich.

## Patentansprüche

1. Messrahmen zur berührungslosen optischen Ermittlung einer Durchschussposition eines Geschosses (134) durch eine Zielfläche (102), wobei der Messrahmen (100) umfasst:
mindestens eine erste Strahlungsquelle (120) zum Aussenden eines ersten divergierenden Strahlungsfeldes (116);
mindestens eine zweite Strahlungsquelle (120) zum Aussenden eines zweiten divergierenden Strahlungsfeldes (116), wobei sich das erste und zweite Strahlungsfeld in einer Ebene quer zu einer Durchschussrichtung unter einem Winkel kreuzen;
mindestens eine erste und mindestens eine zweite optische Empfängereinrichtung, die jeweils der mindestens einen ersten und einer zweiten Strahlungsquelle (120) zugeordnet sind;
wobei jede der optischen Empfängereinrichtungen ein Array von optischen Empfängerelementen (136) aufweist, welche die jeweils empfangene Strahlungsintensität messen, so dass eine räumlich ausgedehnte Abschattungslage infolge des zu detektierenden Geschosses (134) bestimmt wird, und
wobei der Messrahmen (100) zum Formen des von der Strahlungsquelle (120) ausgesendeten Strahlungsfeldes (116) aufeinander folgende Lochblenden (124', 124) mit in Strahlrichtung zunehmendem Blendendurchmesser aufweist.

2. Messrahmen nach Anspruch 1, wobei die optischen Empfängerelemente (136) in mindestens zwei Reihen angeordnet sind und die Empfängerelemente (136) einer Reihe versetzt gegenüber den Empfängerelementen (136) einer benachbarten Reihe angeordnet sind.

3. Messrahmen nach Anspruch 1 oder 2, wobei jedes der Empfängerelemente (136) eine Fotodiode umfasst.

4. Messrahmen nach einem der vorhergehenden Ansprüche, wobei die Strahlungsquelle (120) eine Licht emittierende Diode, LED, die Infrarotstrahlung aussendet, oder eine Laserdiode aufweist.

5. Messrahmen nach einem der vorhergehenden Ansprüche, weiterhin umfassend mindestens eine Empfängerblende (126, 126', 126") zum Ausblenden unerwünschter Strahlung.

6. Messrahmen nach Anspruch 5, wobei die Empfängerblende in Strahlrichtung aufeinander folgende Lochblenden (126, 126', 126") mit unterschiedlicher Öffnungsform aufweist.

7. Messrahmen nach Anspruch 5 oder 6, wobei die Empfängerblende ein Array von Lochblenden (126, 126', 126") aufweist, von denen jede einem optischen Empfängerelement (136) zugeordnet ist.

8. Messrahmen nach einem der vorhergehenden Ansprüche, wobei die erste und zweite Strahlungsquelle (120) und die erste und zweite Empfängereinheit jeweils so angeordnet sind, dass sich die Mittelachsen der ausgesendeten Strahlungsfelder (116) rechtwinklig kreuzen.

9. Messrahmen nach einem der vorhergehenden Ansprüche, wobei der Messrahmen (110) die Zielfläche (102) im Wesentlichen rechteckförmig begrenzt und vier identisch aufgebaute Messleisten (104, 106, 108, 110) aufweist, die entlang der Kanten der rechteckförmigen Begrenzung angeordnet sind.

10. Messrahmen nach Anspruch 9, wobei jede der Messleisten (104, 106, 108, 110) mindestens eine Strahlungsquelle (120) und mindestens eine Empfängereinrichtung umfasst.

11. Verfahren zur berührungslosen optischen Ermittlung einer Durchschussposition eines Geschosses (134) durch eine Zielfläche (102) unter Verwendung eines Messrahmens (100) nach einem der vorhergehenden Ansprüche, wobei das Verfahren die folgenden Schritte umfasst:
Aussenden mindestens eines ersten und mindestens eines zweiten divergierenden Strahlungsfeldes (116) ausgehend von einer ersten und einer zweiten Strahlungsquelle (120), wobei sich das erste und zweite Strahlungsfeld in einer Ebene quer zu einer Durchschussrichtung unter einem Winkel kreuzen;
Ermitteln einer Abschattungslage an mindestens einer ersten und an mindestens einer zweiten Empfängereinrichtung, die jeweils der mindestens einen ersten und einer zweiten Strahlungsquelle (120) zugeordnet sind, durch Messen der Strahlungsintensität an einzelnen optischen Empfängerelementen (136) eines Arrays von optischen Empfängerelementen (136);
Berechnen von mindestens drei Tangenten (138) unter Verwendung der Begrenzungen der ermittelten Abschattungslagen und der Position der zugehörigen Strahlungsquelle (120);
Berechnen und Ausgeben der Durchschussposition und/oder des Kalibers auf Basis der berechneten Tangenten (138).

12. Verfahren nach Anspruch 11, weiterhin umfassend einen Kalibrierschritt, bei dem die mindestens eine Strahlungsquelle zum Erzeugen eines Kalibrierwertes abgeschaltet und wieder eingeschaltet wird und ein Differenzwert der Strahlungsintensität zwischen dem beleuchteten und dem unbeleuchteten Zustand der zugehörigen Empfängereinheit zur Bestimmung eines Kalibrierfaktors verwendet wird.

13. Verfahren nach Anspruch 12, wobei der Differenzwert mit einem Schwellenwert verglichen wird, um eine Warnmeldung zu erzeugen, wenn der Schwellenwert unterschritten wird.

14. Verfahren nach einem der Ansprüche 11 bis 13, wobei vier Tangenten (138) berechnet werden und mit Hilfe der redundanten Information eine Plausibilitätsprüfung der gemessenen Werte vorgenommen wird.

15. Anzeigesystem zur Anzeige eine Durchschussposition eines Geschosses durch eine Zielfläche mit mindestens einem Messrahmen (100) nach einem der Ansprüche 1 bis 10, mindestens einer Auswertevorrichtung und mindestens einer Anzeigevorrichtung.

## Claims

1. Measuring frame for contactless optical determination of a gunshot position of a bullet (134) through a target area (102), wherein the measuring frame (100) comprises:
at least a first radiation source (120) for emitting a first diverging radiation field (116);
at least a second radiation source (120) for emitting a second diverging radiation field (116), wherein the first and the second radiation field intersect in a plane, which is transversal to a gunshot direction, under an angle;
at least a first and at least a second optical receiver unit that are associated to the at least first and second radiation source (120), respectively;
wherein each of the optical receiver units has an array of optical receiver elements (136) which measure the respectively received radiation intensity, so that a spatially extended shading position due to the bullet (134) to be detected can be evaluated, and
wherein the measurement frame (100) comprises sequentially arranged orifices (124, 124') for shaping the radiation filed emitted by the radiation source (120), the aperture diameter of the orifices increasing in the beam direction.

2. Measuring frame according to claim 1, wherein the optical receiver elements (136) are arranged in at least two rows and the receiver elements (136) of one row are arranged in a staggered way in relation to the receiver elements (136) of an adjacent row.

3. Measuring frame according to claim 1 or 2, wherein each of the receiver elements (136) comprises a photodiode.

4. Measuring frame according to one of the preceding claims, wherein the radiation source (120) comprises a light-emitting diode (LED), which emits infrared radiation, or a laser diode.

5. Measuring frame according to one of the preceding claims, further comprising at least one receiver orifice (126, 126', 126") for suppressing undesired radiation.

6. Measuring frame according to claim 5, wherein the receiver orifice comprises successive pinhole apertures (126, 126', 126") in the beam direction with different aperture shapes.

7. Measuring frame according to claim 5 or 6, wherein the receiver orifice comprises an array of pinhole apertures (126, 126', 126"), each of which is associated with an optical receiver element (136).

8. Measuring frame according to one of the preceding claims, wherein the first and second radiation source (120) and the first and second receiver unit are respectively arranged in a way that the central axes of the emitted radiation fields intersect at right angles.

9. Measuring frame according to one of the preceding claims, wherein the measuring frame (100) delimits the target area (102) in an essentially rectangular way and is equipped with four substantially identical measuring rails (104, 106, 108, 110) that are arranged along the edges of the rectangular delimitation.

10. Measuring frame according to claim 11, wherein each of the measuring rails (104, 106, 108, 110) comprises at least one radiation source (120) and at least one receiver unit.

11. Method for contactless optical determination of a gunshot position of a bullet (134) through a target area (102) using a measuring frame (100) according to one of the preceding claims, wherein the method comprises the following steps:
emitting at least a first and at least a second diverging radiation field (116) starting from a first and a second radiation source (120), wherein the first and second radiation field intersect in a plane that is transversal to a gunshot position at an angle;
determining a shading position on at least a first and on at least a second receiver unit, which are respectively associated to the at least one first and second radiation source (120), by measuring the radiation intensity at individual optical receiver elements (136) of an array of optical receiver elements (136);
calculating at least three tangents (138) using the delimitations of the determined shading positions and the position of the associated radiation source (120);
calculating and outputting the gunshot position and/or the caliber on the basis of the calculated tangents (138).

12. Method according to claim 11, further comprising a calibration step in which the at least one radiation source is switched off for generating a calibration value and switched on again, and wherein a difference value of the radiation intensity between the illuminated and the non-illuminated state of the associated receiver unit is used to determine a calibration factor.

13. Method according to claim 12, wherein the difference value is compared to a threshold value in order to create a warning message when difference value is below the threshold value.

14. Method according to one of the claims 11 to 13, wherein our tangents (138) are calculated, and a plausibility check of the measured values is performed by means of the redundant information.

15. Display system to display a gunshot position of a bullet through a target with at least one measuring frame (100) according to one of the claims 1 to 10, at least one evaluation system, and at least one display unit.

## Revendications

1. Cadre de mesure pour la détermination optique, sans contact, d'une position de tir d'un projectile (134) à travers une surface de cible (102), le cadre de mesure (100) comprenant :
au moins une source de rayonnement (120) destinée à émettre un premier champ de rayonnement (116) divergent ;
au moins une deuxième source de rayonnement (120) destinée à émettre un deuxième champ de rayonnement divergent (116), le premier et le deuxième champ de rayonnement se croisant selon un certain angle dans un plan transversalement à la direction de tir le traversant ;
au moins un premier et au moins un deuxième dispositif de réception optique, qui sont associés respectivement à ladite au moins une première et deuxième source de rayonnement (120) ;
cadre de mesure dans lequel chacun des dispositifs de réception optique présente un réseau d'éléments de réception optiques (136), qui mesurent l'intensité de rayonnement respectivement reçue, de manière à déterminer une position d'ombrage d'étendue spatiale résultant du projectile (134) à détecter, et
le cadre de mesure (100) pour former le champ de rayonnement (116) émis par la source de rayonnement (120) présente des diaphragmes à trou (24', 124) successifs avec un diamètre de diaphragme croissant dans la direction du rayonnement.

2. Cadre de mesure selon la revendication 1, dans lequel les éléments de réception optiques (136) sont agencés en au moins deux rangées, et les éléments de réception (136) d'une rangée sont agencés de manière décalée par rapport aux éléments de réception (136) d'une rangée voisine.

3. Cadre de mesure selon la revendication 1 ou la revendication 2, dans lequel chacun des éléments de réception (136) comprend une photodiode.

4. Cadre de mesure selon l'une des revendications précédentes, dans lequel la source de rayonnement (120) présente une diode émettrice de lumière, LED, qui émet un rayonnement infrarouge, ou une diode laser.

5. Cadre de mesure selon l'une des revendications précédentes, comprenant, en outre, au moins un diaphragme de récepteur (126, 126', 126'') pour arrêter une part de rayonnement non souhaitée.

6. Cadre de mesure selon la revendication 5, dans lequel le diaphragme de récepteur comprend des diaphragmes à trous successifs (126, 126', 126'') avec une forme d'ouverture différente.

7. Cadre de mesure selon la revendication 5 ou la revendication 6, dans lequel le diaphragme de récepteur comprend un réseau de diaphragmes à trous (126, 126', 126''), dont chacun est associé à un élément de réception optique (136).

8. Cadre de mesure selon l'une des revendications précédentes, dans lequel la première et la deuxième source de rayonnement (120) et la première et la deuxième unité de réception sont agencées respectivement de manière à ce que les axes médians des champs de rayonnement (116) émis se croisent à angle droit.

9. Cadre de mesure selon l'une des revendications précédentes, dans lequel le cadre de mesure (110) délimite la surface de cible (102) sensiblement sous forme rectangulaire et comporte quatre barres de mesure (104, 106, 108, 110) de construction identique, qui sont agencées le long des bords de la délimitation de forme rectangulaire.

10. Cadre de mesure selon la revendication 9, dans lequel chacune des barres de mesure (104, 106, 108, 110) comprend au moins une source de rayonnement (120) et au moins un dispositif de réception.

11. Procédé de détermination optique, sans contact, d'une position de tir d'un projectile (134) à travers une surface de cible (102), en utilisant un cadre de mesure (100) selon l'une des revendications précédentes, le procédé comportant les étapes suivantes :
émission d'au moins un premier et d'au moins un deuxième champ de rayonnement (116) divergent à partir d'une première et d'une deuxième source de rayonnement (120), le premier et le deuxième champ de rayonnement se croisant selon un certain angle dans un plan transversalement à la direction de tir le traversant ;
détermination d'une position d'ombrage au niveau d'au moins un premier et d'au moins un deuxième dispositif de réception, qui sont associés respectivement aux dites au moins une première et une deuxième source de rayonnement (120), par la mesure de l'intensité de rayonnement au niveau d'éléments de réception optiques (136) individuels d'un réseau d'éléments de réception optiques (136) ;
calcul d'au moins trois tangentes (138) en utilisant les délimitations des positions d'ombrage déterminées et de la position de la source de rayonnement (120) associée ; calcul et délivrance de la position de tir et/ou du calibre sur la base des tangentes (138) calculées.

12. Procédé selon la revendication 11, comportant en outre une étape de calibrage d'après lequel ladite au moins une source de rayonnement, pour produire une valeur de calibrage, est arrêtée et à nouveau mise en marche, et une valeur de différence de l'intensité de rayonnement entre l'état éclairé et l'état non éclairé de l'unité de réception associée, est utilisée pour la détermination d'un facteur de calibrage.

13. Procédé selon la revendication 12, d'après lequel la valeur de différence est comparée à une valeur de seuil, pour produire un message d'alerte lorsque l'on passe sous la valeur de seuil.

14. Procédé selon l'une des revendications 11 à 13, d'après lequel on calcule quatre tangentes (138), et à l'aide de l'information redondante, on effectue un test de plausibilité des valeurs mesurées.

15. Système d'affichage pour afficher une position de tir d'un projectile à travers une surface de cible, comprenant au moins un cadre de mesure (100) selon l'une des revendications 1 à 10, au moins un dispositif de traitement de données et au moins un dispositif d'affichage.
